# EUROPEAN PATENT SPECIFICATION

(11) **EP 0 903 351 B1**
(45) Date of publication and mention of the grant of the patent: **22.01.2003**
(21) Application number: 98116032.8
(22) Date of filing: 25.08.1998
(51) Int. Cl.: C07F 5/02

(54) **Handling method of (fluoroaryl) borane compound and preparing method of hydrocarbon solution**
Behandlung von (Fluoroaryl)boranverbindung und Verfahren zur Herstellung einer Kohlenwasserstofflösung
Manipulation de composé (fluoroaryl)borane, et procédé pour préparer une solution d'hydrocarbure

(30) Priority: 18.09.1997 JP 25383097
(43) Date of publication of application: 24.03.1999
(73) Proprietor: Nippon Shokubai Co., Ltd., Osaka-shi, Osaka 541-0043 (JP)
(72) Inventor: Mitsui, Hitoshi, Kitakatsuragi-gun, Nara 639-0214 (JP); Ueno, Tsunemasa, Ikeda-shi, Osaka 563-0029 (JP); Ikeno, Ikuyo, Osaka-shi, Osaka 553-0001 (JP); Yamamoto, Naoko, Nishinomiya-shi, Hyogo 663-8003 (JP)
(74) Representative: Müller, Frithjof E., Dipl.-Ing.

(56) References cited:
- EP-A- 0 604 963

## Description

### FIELD OF THE INVENTION

The present invention relates to a handling method of (fluoroaryl)borane compounds, such as tris(fluoroaryl)borane and bis(fluoroaryl)boryl halide, serving as, for example, a useful co-catalyst for a metallocene catalyst (polymeric catalyst) used in a cation complex polymerization reaction, and to a preparing method of a hydrocarbon solution of the (fluoroaryl)borane compound.

### BACKGROUND OF THE INVENTION

Tris(fluoroaryl)borane, especially tris(pentafluorophenyl)borane, is a useful compound as a co-catalyst for promoting activity of a metallocene catalyst (polymeric catalyst) used in a cation complex polymerization reaction, for example. The metallocene catalyst has been receiving considerable attentions as a polyolefin polymeric catalyst.

For example, Z. Naturforsch., 20b, 5 (1965) discloses a method of letting pentafluorophenyl magnesium bromide and a boron trifluoride diethyl ether complex undergo a Grignard reaction in a chained ether solvent as a method of obtaining the above tris(pentafluorophenyl) borane.

Generally, the (fluoroaryl)borane compound, such as tris(pentafluorophenyl)borane obtained in the above method, is handled in the form of a hydrocarbon solution.

However, the solubility of the (fluoroaryl)borane compound, such as tris(pentafluorophenyl)borane, in the hydrocarbon solvent, especially an unsaturated hydrocarbon solvent, is relatively small at a normal temperature. Thus, when the (fluoroaryl)borane compound is stored (preserved), transported, transferred, or used, the (fluoroaryl)borane compound is handled in the form of a hydrocarbon solution prepared to have a concentration of the (fluoroaryl)borane compound in a range between 2wt% and 4wt%. Therefore, a large vessel or device is required to handle the (fluoroaryl)borane compound, which becomes critical disadvantages in terms of industrial and economical benefits.

To solve the above problems, the (fluoroaryl)borane compound may possibly be handled in the form of a solid (powders).

However, a solid (powders) of the (fluoroaryl)borane compound has a solubility as low as 1wt% or so in the hydrocarbon solvent, especially an unsaturated hydrocarbon solvent, at a normal temperature. Thus, when a hydrocarbon solution having a suitable concentration for the use as a raw material in producing a catalyst for polyolefin polymerization is prepared as the aforementioned co-catalyst, more specifically, when a hydrocarbon solution having a concentration of 2wt%-4wt% is prepared, for example, a solid (powders) of the (fluoroaryl)borane compound is mixed with the hydrocarbon solvent, after which the resulting mixture must be kept at high temperatures over a long period to dissolve the compound into the solvent. Also, since the mixture is heated for a long period to dissolve the (fluoroaryl)borane compound into the solvent at high temperatures, a decomposition reaction, deterioration, quality alternation or the like of the (fluoroaryl)borane compound occurs during the process, thereby lowering the purity of the (fluoroaryl)borane compound.

Further, the presence of water triggers the decomposition reaction of the (fluoroaryl)borane compound. Thus, if moisture in the air enters into a solid (powders) of the (fluoroaryl)borane compound, for example, the purity of the (fluoroaryl)borane compound drops. Moreover, a solid (powders) of the (fluoroaryl)borane compound has poor fluidity. For this reason, a special device or the like is required to handle a solid (powders) of the (fluoroaryl)borane compound while completely removing moisture in the air, for example.

As has been discussed above, when the (fluoroaryl)borane compound is made into a solid (powders), its handling becomes too complicated and there arises a problem that the handling is critically disadvantageous in terms of industrial and economical benefits. Thus, there has been an increasing need for a handling method of the (fluoroaryl)borane compound, with which the (fluoroaryl)borane compound can be handled in an industrially and economically advantageous manner, arid a preparing method of a hydrocarbon solution of the (fluoroaryl)borane compound, with which the hydrocarbon solution can be prepared readily and quickly without lowering the purity of the (fluoroaryl)borane compound.

EP 0 604 963 A1 discloses the preparation of tris(pentafluorophenyl)borane as well as the preparation of borane complexes. In the examples, the (fluoroaryl)borane compound is either used as a solution, i. e. in a completely dissolved form, or is isolated in the form of a powder.

In Example 1, the borane compound is prepared in tetrahydrofurane and then the magnesium salt is precipitated by the addition of toluene. The precipitate is isolated and afterwards reacted with a solution of pentafluorophenylithium in ether. In Example 2,the (fluoroaryl)borane compound is prepared in 1,2-dimethoxyethane/ethylbenzene in the form of a solution. In Example 3, the (fluoroaryl)borane compound is prepared in ether and octane as solvent. After distilling off the diethylether the precipitated magnesium salt is removed by filtration and afterwards the (fluoroaryl)borane compound is crystallized by cooling the octane solution and the crystals are isolated and dried. In Example 4, a solution of the (fluoroaryl)borane compound in tetrahydrofuran/octane is prepared without isolation of the borane-THF-complex. In Example 5, the (fluoroaryl)borane compound is prepared in 1,2-dimethoxyethane. After addition of toluene the 1,2-dimethoxyethane is distilled off and the borane compound is precipitated in the form of a magnesium salt. After isolation of the precipitate the magnesium salt is reacted with pentafluorophenyl-lithium in diethyl-ether. In Example 6, the (fluoroaryl)compound is prepared in the ethylether. After addition of toluene the side-produced magnesium fluoride chloride is removed by filtration and then octane is added to the toluene solution. After crystallization the (fluoroaryl)borane compound is isolated as a solid. In Example 7, the (fluoroaryl)borane compound is prepared in the form of a dissolved borane-1,2-dimethoxyethane-complex. The borane compound is handled in form of a solution. In Example 8, a (fluoroaryl)borane-1,2-dimethoxyethane-complex is prepared. The borane compound is handled in form of a solution. In Example 9, the (fluoroaryl)borane compound is prepared in diethyl-ether and after addition of toluene precipitated magnesiumfluoridebromide is removed by filtration. After distilling off toluene the borane compound is purified by sublimation.

### SUMMARY OF THE INVENTION

It is therefore an object of the present invention to provide a handling method of the (fluoroaryl)borane compound, with which the (fluoroaryl)borane compound can be handled in an industrially and economically advantageous manner, and a preparing method of a hydrocarbon solution of the (fluoroaryl)borane compound, with which the hydrocarbon solution can be prepared readily and quickly without lowering the purity of the (fluoroaryl)borane compound.

The inventors of the present invention conducted an assiduous study on the handling method of the (fluoroaryl)borane compound and the preparing method of the hydrocarbon solution. In due course, the inventors discovered that, when the (fluoroaryl)borane compound is handled in the form of slurry made with a hydrocarbon solvent A, a smaller vessel or device can be used compared with a case of handling the same in the form of a solution, thereby making it possible to handle the (fluoroaryl)borane compound in an industrially and economically advantageous manner. Also, the inventors achieved the present invention when they discovered that a hydrocarbon solution having a concentration of the (fluoroaryl)borane compound in a range between 1wt% and 10wt% can be readily and quickly prepared without lowering the purity of the (fluoroaryl)borane compound by dissolving the above slurry into a hydrocarbon solvent B in a virtually air-tight vessel.

To achieve the above and other objects, a handling method of the (fluoroaryl)borane compound of the present invention is characterized in that a (fluoroaryl)borane compound expressed by General Formula (1) 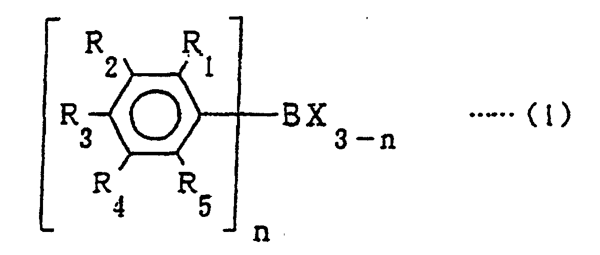 where each of R₁, R₂, R₃, R₄, and R₅ independently represents a hydrogen atom, a fluorine atom, a hydrocarbon group, or an alkoxy group provided that at least one of R₁ - R₅ represents a fluorine atom, X represents a fluorine atom, a chlorine atom, a bromine atom, or an iodine atom, and n represents 2 or 3, is handled in the form of slurry made with a hydrocarbon solvent A without being isolated from the slurry in form of a powder.

According to the above method, compared with a case of handling the (fluoroaryl)borane compound in the form of a solution, a smaller vessel or device can be used by handling the same in the form of the slurry. Consequently, it has become possible to handle the (fluoroaryl)borane compound in an industrially and economically advantageous manner. Further, for example, when the hydrocarbon solution is filtered at a temperature at which the (fluoroaryl)borane compound does not crystalize, undissolved components (impurities), such as magnesium halide, contained in the hydrocarbon solution can be separated/removed as the filtration residue. Therefore, the (fluoroaryl)borane compound can be handled in the form of pure slurry.

Also, to achieve the above and other objects, the preparing method of the hydrocarbon solution of the (fluoroaryl)borane compound of the present invention is characterized in that a hydrocarbon solution having a concentration of the (fluoroaryl)borane compound in a range between 1wt% and 10wt% is prepared by dissolving the above slurry into a hydrocarbon solvent B in a virtually air-tight vessel.

According to the above method, since the (fluoroaryl)borane compound has been already made into the slurry with the hydrocarbon solvent A, the (fluoroaryl)borane compound dissolves into the hydrocarbon solvent B quickly. In other words, it is not necessary to heat the mixture for a long period to dissolve the (fluoroaryl)borane compound into the solvent at high temperatures. Consequently, it has become possible to prepare a hydrocarbon solution having a concentration of the (fluoroaryl)borane compound in a range between 1wt% and 10wt% readily and quickly without lowering the purity of the (fluoroaryl)borane compound.

Further objects, features, advantages of the present invention will be fully understood by the following description. Also, the benefits of the present invention will be apparent from the following explanation.

### DESCRIPTION OF THE EMBODIMENTS

A handling method of the (fluoroaryl)borane compound expressed by General Formula (1) above of the present invention is a method of handling the (fluoroaryl)borane compound in the form of slurry made with a hydrocarbon solvent A. Also, a preparing method of a hydrocarbon solution of the (fluoroaryl)borane compound expressed by General Formula (1) above of the present invention is a method of preparing a hydrocarbon solution having a concentration of the (fluoroaryl)borane compound in a range between 1wt% and 10wt% by dissolving the above slurry into a hydrocarbon solvent B in a virtually air-tight vessel.

In the present invention, the expression "handle the (fluoroaryl)borane compound" means the handling of the (fluoroaryl)borane compound when it is stored (preserved), transported, transferred, or used (including the process of preparing the hydrocarbon solution). Also, in the present invention, the phrase "in the form of slurry" or the term "slurry" includes the case where the (fluoroaryl)borane compound exists in the hydrocarbon solvent A in the form of a so-called cake.

The (fluoroaryl)borane compound to be handled in the present invention expressed by the above formula is a compound, in which each of the substituents denoted as R₁, R₂, R₃, R₄, and R₅ is independently a hydrogen atom, a fluorine atom, a hydrocarbon group, or an alkoxy group, provided that at least one of the substituents denoted as R₁-R₅ is a fluorine atom, the substituent denoted as X is a fluorine atom, a chlorine atom, a bromine atom, or an iodine atom, and n is 2 or 3. Thus, when n=2, the (fluoroaryl)borane compound is bis(fluoroaryl)boryl halide, and when n=3, the (fluoroaryl)borane compound is tris (fluoroaryl)borane.

Examples of the hydrocarbon group include: an aryl group, a straight-chain, branched-chain, or cyclic alkyl group having up to 12 carbon atoms; a straight-chain, branched-chain, or cyclic alkenyl group having 2-12 carbon atoms, etc. The hydrocarbon group may further include a functional group that remains inactive to the handling method and preparing method of the present invention. Examples of such a functional group include: a methoxy group, a methylthio group, an N,N-dimethylamino group, an o-anise group, a p-anise group, a trimethylsilyl group, a t-butyldimethylsilyloxy group, a trifluoromethyl group, etc.

The alkoxy group is expressed by General Formula (A):

-ORₐ (A)

where Rₐ represents a hydrocarbon group. Examples of the hydrocarbon group denoted as Rₐ in the formula include: an aryl group, a straight-chain, branched-chain, or cyclic alkyl group having up to 12 carbon atoms, a straight-chain, branched-chain, or cyclic alkenyl group having 2-12 carbon atoms. The hydrocarbon group may further include a functional group that remains inactive to the handling method and preparing method of the present invention.

Examples of the alkoxy group expressed by General Formula (A) above include: a methoxy group, an ethoxy group, an n-propoxy group, an isopropoxy group, an n-butoxy group, an isobutoxy group, a sec-butoxy group, a t-butoxy group, a cyclohexyloxy group, an allyloxy group, a phenoxy group, etc.

The (fluoroaryl)borane compound can be obtained by, for example, reacting an adequate kind of a (fluoroaryl)magnesium derivative with boron halide in an ether solvent or the like. If a mole ratio of the (fluoroaryl)magnesium derivative and boron halide is set adequately, either of bis(fluoroaryl)boryl halide or tris(fluoroaryl)borane can be obtained selectively.

The slurry of the (fluoroaryl)borane compound made with the hydrocarbon solvent A can be readily obtained by a so-called solvent exchange technique to exchange an ether solvent with the hydrocarbon solvent A. To be more specific, an ether solution of the (fluoroaryl)borane compound is mixed with the hydrocarbon solvent A, while the ether solvent is being distilled out, and the resulting hydrocarbon solution is filtered at a temperature at which the (fluoroaryl)borane compound does not crystalize, after which the filtrate is cooled in a virtually air-tight vessel. Examples of the ether solvent include, but not limited: chained ethers, such as dimethyl ether, diethyl ether, dipropyl ether, diisopropyl ether, dibutyl ether, diisobutyl ether, dipentyl ether, diisopentyl ether, 1, 2-dimethoxy ethane, 1,2-diethoxy ethane, and di-2-methoxy ethyl ether; cyclic ethers, such as tetrahydrofuran, tetrahydropyrane and 1,4-dioxane; etc. The manufacturing method of the (fluoroaryl)borane compound is not especially limited.

Examples of bis(fluoroaryl)boryl halide include: bis(pentafluorophenyl)boryl halide, bis(2,3,4,6-tetrafluorophenyl)boryl halide, bis(2,3,5,6-tetrafluorophenyl)boryl halide, bis(2,3,5-trifluorophenyl)boryl halide, bis(2,4,6-trifluorophenyl)boryl halide, bis(1,3-difluorophenyl)boryl halide, bis(2,3,5,6-tetrafluoro-4-methylphenyl)boryl halide, bis(2,3,4,6-tetrafluoro-5-methylphenyl)boryl halide, bis(2,4,5-trifluoro-6-methylphenyl)boryl halide, bis(2,3,6-trifluoro-4-methylphenyl)boryl halide, bis(2,4,6-trifluoro-3-methylphenyl)boryl halide, bis(2,6-difluoro-3-methylphenyl)boryl halide, bis(2,4-difluoro-5-methylphenyl)boryl halide, bis(3,5-difluoro-2-methylphenyl)boryl halide, bis(4-methoxy-2,3,5,6-tetrafluorophenyl)boryl halide, bis(3-methoxy-2,4,5,6-tetrafluorophenyl)boryl halide, bis(2-methoxy-3,5,6-trifluorophenyl)boryl halide, bis (3-methoxy-2,5,6-trifluorophenyl)boryl halide, bis(3-methoxy-2,4,6-trifluorophenyl)boryl halide, bis(2-methoxy-3,5-difluorophenyl)boryl halide, bis(3-methoxy-2,6-difluorophenyl)boryl halide, bis(3-methoxy-4,6-difluorophenyl)boryl halide, bis(2-methoxy-4,6-difluorophenyl)boryl halide, and bis (4-methoxy-2, 6-difluorophenyl)boryl halide, etc.

Examples of tris(fluoroaryl)borane include: tris(pentafluorophenyl)borane, tris(2,3,4,6-tetrafluorophenyl)borane, tris(2,3,5,6-tetrafluorophenyl)borane, tris(2,3,5-trifluorophenyl)borane, tris(2,4,6-trifluorophenyl) borane, tris(1,3-difluorophenyl)borane, tris(2,3,5,6-tetrafluoro-4-methylphenyl)borane, tris(2,3,4,6-tetrafluoro-5-methylphenyl)borane, tris(2,4,5-trifluoro-6-methylphenyl)borane, tris(2,3,6-trifluoro-4-methylphenyl) borane, tris (2,4,6-trifluoro-3-methylphenyl)borane, tris(2,6-difluoro-3-methylphenyl)borane, tris(2,4-difluoro-5-methylphenyl)borane, tris(3,5-difluoro-2-methylphenyl)borane, tris(4-methoxy-2,3,5,6-tetrafluorophenyl) borane, tris (3-methoxy-2, 4, 5,6-tetrafluorophenyl)borane, tris(2-methoxy-3,5,6-trifluorophenyl)borane, tris(3-methoxy-2,5,6-trifluorophenyl)borane, tris(3-methoxy-2,4,6-trifluorophenyl)borane, tris(2-methoxy-3,5-difluorophenyl)borane, tris(3-methoxy-2,6-difluorophenyl)borane, tris(3-methoxy-4,6-difluorophenyl)borane, tris(2-methoxy-4,6-difluorophenyl)borane, tris(4-methoxy-2,6-difluorophenyl)borane, etc. Of all these example compounds, tris (pentafluorophenyl) borane is particularly suitable.

The hydrocarbon solvent A used in the handling method of the present invention is not especially limited as long as being an inactive non-aqueous solvent having a higher boiling point than the ether solvent, for example. The hydrocarbon solvent B used in the preparing method of the present invention is not especially limited as long as being an inactive non-aqueous solvent. The hydrocarbon solvents A arid B can be either identical or different from each other.

Examples of the hydrocarbon solvent A/B include, but not limited to: straight-chain, branched-chain, or cyclic aliphatic hydrocarbons, such as pentane, isopentane, hexane, cyclohexane, methyl cyclohexane, ethyl cyclohexane, heptane, octane, nonane, decane, undecane, dodecane, tridecane, tetradecane, pentadecane, hexadecane, octadecane, paraffin, and petroleum ether; aromatic hydrocarbons, such as benzene, toluene, o-xylene, m-xylene, p-xylene, 1,2,3-trimethylbenzene, 1,2,4-trimethylbenzene, 1,2,5-trimethylbenzene, 1,3,5-trimethylbenzene, ethyl benzene, propylbenzene, and butylbenzene; etc. The aliphatic hydrocarbon and aromatic hydrocarbon may further include a functional group inactive to the handling method and preparing method of the present invention. One member or a mixture of two or more members selected from these example hydrocarbon solvents can be used effectively. Of all these example hydrocarbon solvents, hexane, cyclohexane, methyl cyclohexane, ethyl cyclohexane, heptane, octane, IsoparE of Exxon Corp. (a mixture of isoparaffins having approximately 10 carbon atoms), nonane, decane, octadecane, etc. are more suitable than the others.

The boiling point of the hydrocarbon solvent A is not especially limited, but it is preferably 60°C or above, and more preferably 80°C or above. In case that a mixed hydrocarbon solvent is used as the hydrocarbon solvent A, the boiling point is defined as the lowest boiling point among the boiling points of all the compounds included.

The slurry of the (fluoroaryl)borane compound made with the hydrocarbon solvent A can be readily obtained by: (1) mixing an ether solution of the (fluoroaryl)borane compound with the hydrocarbon solvent A while distilling out the ether solvent; (2) filtering the resulting hydrocarbon solution at a temperature at which the (fluoroaryl)borane compound does not crystalize; (3) and cooling the filtrate in a virtually air-tight vessel. Besides the ether solvent, the ether solution of the (fluoroaryl)borane compound may optionally include other kinds of solvents, such as the hydrocarbon solvent. In other words, the ether solution of the (fluoroaryl)borane compound of the present invention may be a reaction solution obtained by reacting an adequate kind of a (fluoroaryl)magnesium derivative with boron halide in a solvent including the ether solvent. Note that the preparing method of the slurry of the (fluoroaryl)borane compound with the hydrocarbon solvent A is not limited to the above disclosed method.

The method of mixing the ether solution of the (fluoroaryl)borane compound with the hydrocarbon solvent A while distilling out the ether solvent is not especially limited, and example methods are: a method of distilling out the ether solvent after the hydrocarbon solvent A is mixed with the ether solution; a method of distilling out the ether solvent while the ether solution is being dropped to the hydrocarbon solvent A; a method of distilling out the ether solvent while the hydrocarbon solvent A is being dropped to the ether solution; etc. The ether solvent can be distilled out under a normal (atmospheric) pressure or decreasing pressure.

An amount of the (fluoroaryl)borane compound contained in the hydrocarbon solution when it is filtered, that is, a concentration of the (fluoroaryl)borane compound, is not especially limited. However, a concentration as high as possible is preferred, so that the slurry can be handled in a more advantageous manner. To be more specific, it is preferable that the concentration of the (fluoroaryl)borane compound is almost a saturation concentration at the temperature when the hydrocarbon solution is filtered. Containing the (fluoroaryl)borane compound in the hydrocarbon solution above the saturation concentration is not preferable because a part of the (fluoroaryl)borane compound is separated as the filtration residue.

Undissolved components (impurities), such as magnesium halide, produced as a by-product when synthesizing the (fluoroaryl)borane compound and contained in the hydrocarbon solution, can be separated/removed as the residue by filtering the hydrocarbon solution at a temperature at which the (fluoroaryl)borane compound does not crystalize. Consequently, the (fluoroaryl)borane compound can be handled in the form of pure slurry.

The filtering method is not especially limited, and decompression filtration and filtration under pressure, etc. can be used. The temperature of the hydrocarbon solution when it is filtered is not especially limited as long as it is below the boiling point of the hydrocarbon solvent A under a pressure applied during the filtration. However, a higher temperature is preferable to carry out the filtration more efficiently. To be more specific, a temperature in a range between 0°C and 200°C is more preferable and a temperature in a range between 30°C and 150°C is further preferable. Also, it is preferable that the temperature of the hydrocarbon solution is maintained so as not to drop during the filtration to suppress the crystallization of the (fluoroaryl)borane compound.

By cooling the filtrate obtained by the above filtration in a virtually air-tight vessel, the (fluoroaryl)borane compound is crystallized, whereby slurry of the (fluoroaryl)borane compound made with the hydrocarbon solvent A is obtained. The temperature of the cooled filtrate can be below the temperature of the hydrocarbon solution when it is filtered as long as the hydrocarbon solvent A does not coagulate. An amount of the filtrate charged to the vessel with respect to a capacity thereof is not especially limited; however, it is preferable to charge (fill) the filtrate to the vessel so as to leave the least space inside.

The virtually air-tight vessel used in the present invention is not especially limited. However, a vessel equipped with a nozzle for circulating the content, namely the slurry (or hydrocarbon solution), is preferable, and examples of which include: installation type tanks, such as a tank equipped with an internal heating coil and a tank equipped with external heating cylinder; portable tanks, such as a tank wagon, a tank rolly, and a bulk container; etc.

An amount of the (fluoroaryl)borane compound contained in the slurry varies depending on a combination of the (fluoroaryl)borane compound and hydrocarbon solvent A and temperatures. However, to handle the (fluoroaryl)borane compound in a more efficient manner while it is stored (preserved) , transported, transferred, or used (including the process of preparing the hydrocarbon solution), an amount in a range between 5wt% and 90wt% is preferable, an amount in a range between 6wt% and 80wt% is more preferable, and an amount in a range between 7wt% and 70wt% is particularly preferable.

It is preferable that a space inside the vessel is in an atmosphere where moisture and oxygen that trigger a decomposition reaction, the deterioration or quality alteration of the (fluoroaryl)borane compound are almost completely removed, for example, in an inert gas atmosphere, such as a nitrogen gas, a helium gas, and an argon gas. The temperature of the slurry inside the vessel, that is, the temperature of the slurry when it is stored (preserved), transported, transferred, or used, is not especially limited. However, it is preferable to maintain the temperature of the slurry at or below 50°C to suppress the decomposition reaction of the (fluoroaryl)borane compound.

As has been explained, according to the method of the present invention, by handling the (fluoroaryl)borane compound in the form of the slurry made with the hydrocarbon solvent A, a smaller vessel or device can be used compared with a case of handling the same in the form of a solution. Consequently, it has become possible to handle the (fluoroaryl)borane compound in an industrially and economically advantageous manner.

Also, a hydrocarbon solution having a concentration of the (fluoroaryl)borane compound in a range between 1wt% and 10wt% can be prepared by dissolving the above slurry into the hydrocarbon solvent B in a virtually air-tight vessel. It is preferable that the hydrocarbon solvent B, into which the slurry is dissolved, is identical with the hydrocarbon solvent A forming the slurry. A vessel used when preparing the hydrocarbon solution and a vessel used for handling the slurry may be identical or different from each other. Alternatively, after the slurry is handled and dissolved into the hydrocarbon solvent B in the same vessel, the resulting hydrocarbon solution may be transferred to another vessel to adjust a concentration of the (fluoroaryl)borane compound to a desired level. Note that when the slurry is handled with a vessel and transferred to another vessel to prepare the hydrocarbon solution, it is preferable to carry out this process in an inert gas atmosphere.

A method of mixing the slurry with the hydrocarbon solvent B while dissolving the former into the latter is not especially limited, and example methods are: a method of dissolving the slurry into the hydrocarbon solvent B after the slurry and the hydrocarbon solvent B are mixed with each other; a method of dissolving the slurry into the hydrocarbon solvent B while the former is being added to the latter; a method of dissolving the slurry into the hydrocarbon solvent B while the latter is being added to the former; etc. The slurry can be dissolved into the hydrocarbon solvent B by heating the vessel, namely the content, with stirring. A heating temperature to heat the content is not especially limited. Also, a pressure inside the vessel can be a normal (atmospheric), decreasing, or increasing pressure. Note that the preparing method of the hydrocarbon solution of the (fluoroaryl)borane compound is not limited to the above disclosed methods.

The slurry is handled while being dissolved into the hydrocarbon solvent B by the following method, for example. That is, the slurry is injected into a portable tank, such as a tank rolly and a bulk container, equipped with nozzles inside the upper portion and lower portion, after which the portable tank is transported to the destination. Then, the hydrocarbon solvent B is injected to the portable tank at the destination, after which the content is circulated inside the portable tank while the portable tank is kept heated. In other words, an example method of preparing the hydrocarbon solution of the (fluoroaryl)borane compound is a method of adding the hydrocarbon solvent B to the slurry in the portable tank at the destination where the hydrocarbon solution will be used, and then the content is circulated while the portable tank is kept heated.

As has been discussed above, according to the method of the present invention, since the (fluoroaryl)borane compound is in the form of the slurry made with the hydrocarbon solvent A, the (fluoroaryl)borane compound dissolves into the hydrocarbon solvent B quickly. In other words, it is not necessary to heat the hydrocarbon solution for a long period to dissolve the (fluoroaryl)borane compound into the hydrocarbon solution at high temperatures. Consequently, it has become possible to prepare a hydrocarbon solution having a concentration of the (fluoroaryl)borane compound in a range between 1wt% and 10wt%, preferably between 2wt% and 4wt%, readily and quickly without lowering the purity.

In the above method, the slurry is dissolved into the hydrocarbon solvent B in a virtually air-tight vessel. Hence, the occurrence of a decomposition reaction, the deterioration or quality alteration of the (fluoroaryl)borane compound caused by the heating over a long period, moisture or oxygen can be suppressed. Consequently, it has become possible to maintain the purity of the (fluoroaryl)borane compound. Also, in the above method, for example, a special device for completely removing moisture in the air used when handling a solid (powders) of the (fluoroaryl)borane compound can be omitted. Thus, the preparing method of the present invention has excellent operability and handling properties, and therefore, attains excellent preparing efficiency in preparing the hydrocarbon solution of the (fluoroaryl)borane compound. Here, the concentration can be set to a desired level by adjusting a used amount of the hydrocarbon solvents A and B.

In the following, the present invention will be explained in detail by way of examples and a comparative example, but the present invention is not limited to the disclosure below.

### Example 1

To begin with, air inside a reaction vessel equipped with a thermometer, a dropping funnel, a stirrer, a nitrogen gas conduit, and a Dimroth condenser is displaced by a nitrogen gas satisfactorily. Then, 8.4315g (59.4mmol) of a boron trifluoride diethyl ether complex serving as boron halide and 65ml of diethyl ether (ether solvent) are charged to the reaction vessel. Meanwhile, 113.9g of a diethyl ether solution including 176.3mmol of pentafluorophenyl magnesium bromide serving as a (fluoroaryl)magnesium derivative is charged to the dropping funnel.

Then, the diethyl ether solution is dropped to the content (boron halide solution) with stirring at room temperature over 80 minutes under a nitrogen gas atmosphere, during which a temperature inside the reaction vessel has reached a reflux temperature. When the dropping ends, the reaction solution is let undergo reaction (maturation) at the reflux temperature for 3 hours with stirring under a nitrogen gas atmosphere, whereby a diethyl ether solution of tris(pentafluorophenyl)borane as the (fluoroaryl)borane compound is obtained.

Subsequently, 266g of IsoparE (a commodity name, hydrocarbon solvent A) is charged to a distilling vessel equipped with a thermometer, a dropping funnel, a stirrer, a nitrogen gas conduit, and a Liebig condenser. The end of the outlet of the Liebig condenser is kept open and a receiver is placed at a predetermined position. Meanwhile, the diethyl ether solution of tris(pentafluorophenyl)borane is charged to the dropping funnel.

Then, IsoparE is heated to 96°C with stirring under a nitrogen gas flow, to which the diethyl ether solution in the dropping funnel is dropped over 60 minutes. Subsequently, diethyl ether distilled out during the dropping is removed under a normal pressure. When the dropping ends, the content (mixture) in the distilling vessel is heated to 123°C, whereby 221.5g of a solvent including diethyl ether is distilled out in total.

After the solvent including diethyl ether is distilled out, the content is cooled to 95°C. Meanwhile, air inside a filter equipped with a pressure gauze, a nitrogen gas conduit, a receiver, and a discharge line is displaced by a nitrogen gas satisfactorily, after which the filter is maintained at 95°C-100°C. Then, the content is supplied to the filter and subjected to filtration under pressure with heating by applying a pressure with a nitrogen gas, so that magnesium bromide fluoride as a by-product (crystals) is separated and removed, whereby 182.3g of filtrate is obtained. The filtrate is kept at 50°C, so that tris(pentafluorophenyl) borane does not crystalize.

Then, 26.2g of the filtrate is transferred to a vessel, in which the air has been displaced by a nitrogen gas satisfactorily, and cooled to 25°C. Consequently, slurry of tris(pentafluorophenyl)borane made with IsoparE is obtained in the form of a so-called cake.

The cake is analyzed by ¹⁹F-NMR. More specifically, ¹⁹F-NMR is measured under predetermined conditions using p-fluorotoluene as an internal standard reagent. Then, a peak integral of a fluorine atom of p-fluorotoluene, and a peak integral of fluorine atoms at the ortho-position of a pentafluorophenyl group in tris (pentafluorophenyl)borane are computed from the resulting ¹⁹F-NMR chart first, and thence a weight of tris (pentafluorophenyl)borane is computed using the above two peak integrals. As a result, it turns out that the cake contains 14.1wt% of tris(pentafluorophenyl)borane. In other words, an amount of tris(pentafluorophenyl) borane contained in the slurry is 14.1wt%.

Then, the slurry is mixed with 100.24g of IsoparE (a commodity name, hydrocarbon solvent B), after which the resulting mixture is heated to 40°C. Then, the slurry dissolves into IsoparE quickly, whereby an IsoparE solution of tris(pentafluorophenyl)borane is obtained.

A concentration of tris(pentafluorophenyl)borane in the IsoparE solution measured in the above manner using ¹⁹F-NMR is 2.92wt%. Also, a purity of tris (pentafluorophenyl)borane is 94.7% (area ratio). Thus, the yield of tris(pentafluorophenyl)borane is computed as 85.3%.

An amount of residual diethyl ether contained in the IsoparE solution is measured by measuring ¹H-NMR. To be more specific, ¹H-NMR is measured under predetermined conditions using p-fluorotoluene as an internal standard reagent. A peak integral of a hydrogen atom of a methylene group in diethyl ether, a peak integral of a hydrogen atom of a methyl group in p-fluorotoluene, a peak integral of a fluorine atom of p-fluorotoluene, and a peak integral of fluorine atoms at the ortho-position of a pentafluorophenyl group in tris(pentafluorophenyl)borane are computed from the resulting ¹H-NMR chart and the above-obtained ¹⁹F-NMR chart first, and thence a ratio of the residual diethyl ether with respect to tris(pentafluorophenyl)borane is computed using the above peak integrals. As a result, it turns out that a ratio of the residual diethyl ether with respect to tris(pentafluorophenyl)borane is 4.9mol%.

### Example 2

A diethyl ether solution of tris(pentafulorophenyl) borane is obtained through the reaction and manipulation in the same manner as those in Example 1 above except that an amount of a boron trifluoride diethyl ether complex charged to the reaction vessel is reduced to 8.3887g (59.1mmol), and that 114.2g of a diethyl ether solution containing 183.2mmol of pentafluorophenyl magnesium bromide is charged to the dropping funnel.

Then, 250.1g of n-octane (hydrocarbon solvent A) is charged to a distilling vessel of the same type as the one used in Example 1 above. The end of the outlet of the Liebig condenser is kept open and a receiver is placed at a predetermined position. Meanwhile, the diethyl ether solution of tris(pentafluorophenyl)borane is charged to the dropping funnel.

Then, n-octane is heated to 94°C with stirring under a nitrogen gas flow, after which the diethyl ether solution in the dropping funnel is dropped over 90 minutes. Then, diethyl ether distilled out during the dropping is removed under a normal pressure. When the dropping ends, the content (mixture) in the distilling vessel is heated to 126°C, whereby 225.6g of a solvent including diethyl ether is distilled out in total.

When the distillation of the solvent containing diethyl ether ends, the content is cooled to 96°C. Meanwhile, air inside a filter of the same type as the one used in Example 1 above is displayed by a nitrogen gas satisfactorily, after which the filter is maintained at 98°C-100°C. Then, the content is supplied to the filter and subjected to filtration under pressure with heating by applying a pressure with a nitrogen gas, so that magnesium bromide fluoride is separated and removed, whereby 178.4g of filtrate is obtained. The filtrate is maintained at 50°C, so that tris(pentafluorophenyl)borane does not crystalize.

Then, 5.86g of the filtrate is transferred to a vessel, in which the air has been displaced by a nitrogen gas satisfactorily, after which the filtrate is cooled to 25°C. Consequently, slurry of tris(pentafluorophenyl) borane made with n-octane is obtained in the form of a so-called cake. The cake is analyzed in the same manner as Example 1 above, and it turns out that the cake contains 15.9wt% of tris(pentafluorophenyl)borane, meaning that an amount of tris(pentafluorophenyl)borane contained in the slurry is 15.9wt%.

Then, the slurry is mixed with 23.14g of n-octane (hydrocarbon solvent B), after which the mixture is heated to 42°C. Then, the slurry dissolves into n-octane quickly, whereby an n-octane solution of tris(pentafluorphenyl)borane is obtained.

A concentration and a purity of tris (pentafluorophenyl)borane in the n-octane solution analyzed in the same manner as Example 1 above are 3.15wt% and 93.9% (area ratio), respectively. Thus, the yield of tris(pentafluorophenyl)borane is computed as 91.9%. Also, an amount of the residual diethyl ether contained in the n-octane solution is measured in the same manner as Example 1 above, and it turns out that a ratio of the residual diethyl ether with respect to tris(pentafluorophenyl)borane is 1mol% or less.

### Example 3

Slurry of tris(pentafluorophenyl)borane made with n-octane (hydrocarbon solvent A) is obtained in the form of a so-called cake using 7.84g of the filtrate obtained in Example 2 above through the same manipulation as that in Example 2 above. Like the cake obtained in Example 2 above, it turns out that the cake obtained herein contains 15.9wt% of tris (pentafluorophenyl)borane, meaning that an amount of tris(pentafluorophenhl)borane contained in the slurry is 15.9wt%.

Then, the slurry is mixed with 30.68g of IsoparE (hydrocarbon solvent B), after which the mixture is heated to 38°C. Then, the slurry dissolves into IsoparE quickly, whereby an IsoparE solution (a mixed solution of IsoparE and n-octane) of tris(pentafluorophenyl)borane is obtained.

A concentration and a purity of tris (pentafluorophenyl)borane in the IsoparE solution analyzed in the same manner as Example 1 above are 3.18wt% and 93.9% (area ratio), respectively. Thus, the yield of tris(pentafluorophenyl)borane is computed as 92.0%. Also, an amount of the residual diethyl ether contained in the IsoparE solution is measured in the same manner as Example 1 above, and it turns out that a ratio of the residual diethyl ether with respect to tris(pentafluorophenyl)borane is 1mol% or less.

### Comparative Example 1

Here, 0.4963g (purity: 99%, area ratio) of powders of tris(pentafluorophenyl)borane and 16.0878g of IsoparE are charged to a vessel, in which the air has been displayed by a nitrogen gas satisfactorily, after which the mixture is stirred for 3 hours or so at 28°C with stirring. However, tris(pentafluorophenyl) borane does not dissolve into IsoparE completely.

Thus, the content (mixture) is heated, and tris(pentafluorophenyl)borane has dissolved into IsoparE completely when heated to 87°C. The resulting solution is allowed to stand and cooled, and the solution starts to crystalize when cooled to 63°C. After the solution is cooled to room temperature, the supernatant is analyzed in the same manner as Example 1 above using ¹⁹F-NMR. Consequently, a concentration and a purity of tris(pentafluorophenyl) borane are 0.91wt% and 83.0% (area ratio).

Thus, it is revealed that the conventional preparing method, in which powders of tris(pentafluorophenyl)borane are dissolved into IsoparE with heating, the purity of tris(pentafluorophenyl)borane drops and the IsoparE solution of tris(pentafluorophenyl)borane can not be prepared in a stable manner.

## Claims

1. A handling method of a (fluoroaryl)borane compound expressed as: 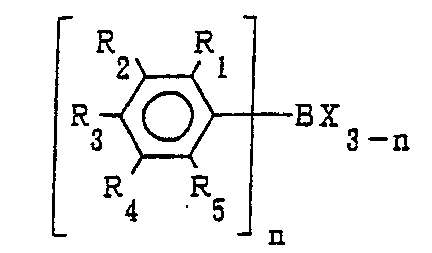 where each of R₁, R₂, R₃, R₄, and R₅ independently represents a hydrogen atom, a fluorine atom, a hydrocarbon group, or an alkoxy group provided that at least one of R₁-R₅ represents a fluorine atom, X represents a fluorine atom, a chlorine atom, a bromine atom, or an iodine atom, and n represents 2 or 3,
**characterized in that**
said (fluoroaryl)borane compound is handled in the form of slurry made with a hydrocarbon solvent A without being isolated from the slurry in form of a powder.

2. The handling method of Claim 1, wherein an amount of said (fluoroaryl)borane compound contained in said slurry is in a range between 5wt% and 90wt% based on a total weight of said slurry.

3. The handling method of Claim 1 or 2, wherein said slurry is obtained by:
mixing an ether solution of said (fluoroaryl)borane compound with said hydrocarbon solvent A while distilling out an ether solvent;
filtering a resulting hydrocarbon solution at a temperature at which said (fluoroaryl)borane compound does not crystalize; and
cooling a filtrate in a virtually air-tight vessel.

4. A preparing method of a hydrocarbon solution of a (fluoroaryl)borane compound **characterized in that** a hydrocarbon solution of said (fluoroaryl)borane compound having a concentration of said (fluoroaryl)borane compound in a range between 1wt% and 10wt% is obtained by dissolving the slurry obtained in any of Claims 1-3 into a hydrocarbon solvent B in a virtually air-tight vessel.

## Patentansprüche

1. Verfahren zur Behandlung einer (Fluoraryl)boranverbindung der Struktur: 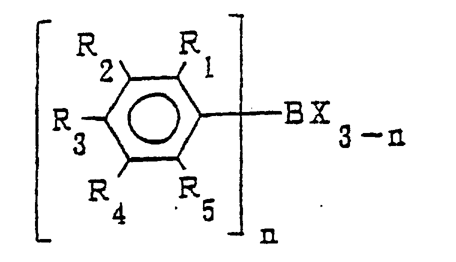 wobei R₁, R₂, R₃, R₄ und R₅ jeweils unabhängig ein Wasserstoffatom, ein Fluoratom, eine Kohlenwasserstoffgruppe oder eine Alkoxygruppe bedeuten, wobei zumindest einer der Reste R₁-R₅ ein Fluoratom bedeutet, X ein Fluoratom, ein Chloratom, ein Bromatom oder ein Jodatom bedeutet, und n 2 oder 3 bedeutet,
**dadurch gekennzeichnet, dass**
die (Fluoraryl)boran-Verbindung in Form eines Slurrys verarbeitet wird, welcher mit einem Kohlenwasserstoff als Lösungsmittel A hergestellt wird, ohne dass der Slurry zunächst in Form eines Pulvers isoliert wird.

2. Behandlungsverfahren nach Anspruch 1, wobei die Menge der im Slurry enthaltenen (Fluoraryl)boranverbindung bezogen auf das Gesamtgewicht des Slurrys im Bereich zwischen 5 Gew.-% und 90 Gew.-% gewählt wird.

3. Behandlungsverfahren nach Anspruch 1 oder 2, wobei der Slurry erhalten wird, indem:
eine Lösung der (Fluoraryl)boranverbindung in Ether mit dem Kohlenwasserstoff des Lösungsmittels A vermischt wird, wobei der Ether abdestilliert wird;
die erhaltene Kohlenwasserstofflösung bei einer Temperatur filtriert wird, bei welcher die (Fluoraryl)boranverbindung nicht auskristallisiert; und
das Filtrat in einem luftdichten Gefäß abgekühlt wird.

4. Verfahren zur Herstellung einer Lösung einer (Fluoraryl)boranverbindung in einem Kohlenwasserstoff,
**dadurch gekennzeichnet, dass**
eine Lösung der (Fluoraryl)boranverbindung in einem Kohlenwasserstoff erhalten wird, wobei die Konzentration der (Fluoraryl)Boranverbindung in einem Bereich zwischen 1 Gew.-% und 10 Gew.-% gewählt ist, indem der nach einem der Ansprüche 1 bis 3 erhaltene Slurry in einem Kohlenwasserstofflösungsmittel B in einem luftdichten Gefäß aufgelöst wird.

## Revendications

1. Procédé de manipulation d'un composé (fluoroaryl)borane représenté par : 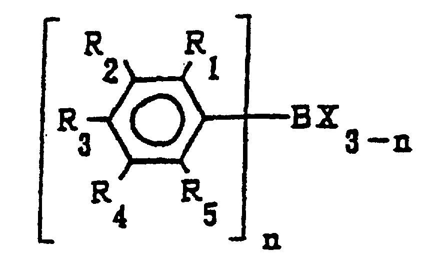 où chacun des radicaux R₁, R₂, R₃, R₄ et R₅ représente indépendamment un atome d'hydrogène, un atome de fluor, un groupe hydrocarboné ou un groupe alcoxy, à condition que l'un au moins des radicaux R₁ à R₅ représente un atome de fluor, X représente un atome de fluor, un atome de chlore, un atome de brome ou un atome d'iode, et n représente 2 ou 3,
**caractérisé en ce que** ledit composé (fluoroaryl)borane est manipulé sous forme d'une suspension fabriquée à l'aide d'un solvant hydrocarboné A sans être isolé de la suspension sous forme d'une poudre.

2. Procédé de manipulation selon la revendication 1, dans lequel la quantité dudit composé (fluoroaryl)borane contenu dans ladite suspension est dans la gamme comprise entre 5 % en poids et 90 % en poids, par rapport au poids total de ladite suspension.

3. Procédé de manipulation selon la revendication 1 ou 2, dans lequel ladite suspension est obtenue par :
mélange dans une solution dans l'éther dudit composé (fluoroaryl)borane avec ledit solvant hydrocarboné A tout en éliminant par distillation le solvant de type éther ;
filtration de la solution hydrocarbonée résultante à une température à laquelle ledit composé (fluoroaryl)borane ne se cristallise pas ; et
refroidissement du filtrat dans un récipient virtuellement hermétique à l'air.

4. Procédé de préparation d'une solution hydrocarbonée d'un composé (fluoroaryl)borane
**caractérisé en ce qu'**une solution hydrocarbonée dudit composé (fluoroaryl)borane ayant une concentration en ledit composé (fluoroaryl)borane dans une gamme comprise entre 1 % en poids et 10 % en poids est obtenue par dissolution de la solution obtenue selon l'une quelconque des revendications 1 à 3, dans un solvant hydrocarboné B dans un récipient virtuellement hermétique à l'air.
